# EUROPÄISCHE PATENTSCHRIFT

(11) **EP 2 815 916 B1**
(45) Veröffentlichungstag und Bekanntmachung des Hinweises auf die Patenterteilung: **27.09.2017**
(21) Anmeldenummer: 14002110.6
(22) Anmeldetag: 18.06.2014
(51) Int. Cl.: B60N 2/48, B60N 2/64, B60N 2/44, B60N 2/24

(54) **FAHRZEUGSITZADAPTER**
VEHICLE SEAT ADAPTER
ADAPTATEUR DE SIÈGE DE VÉHICULE

(30) Priorität: 19.06.2013 DE 102013010293
(43) Veröffentlichungstag der Anmeldung: 24.12.2014
(73) Patentinhaber: El-Embabi, Adel, 34513 Waldeck (DE)
(72) Erfinder: El-Embabi, Adel, 34513 Waldeck (DE)
(74) Vertreter: Samson & Partner Patentanwälte mbB

(56) Entgegenhaltungen:
- DE-U1- 29 504 759
- US-A1- 2003 222 494
- US-A1- 2004 041 451
- US-A1- 2009 217 846

## Beschreibung

### Gebiet der Erfindung

Die Erfindung betrifft einen Fahrzeugsitzadapter zur Anpassung der Sitzform eines Fahrzeugsitzes an einen darin befindlichen Fahrzeuginsassen, von dem ein Arm auf dem Rücken fixiert ist.

### Hintergrund der Erfindung

Auch wenn eine festgenommene Person normalerweise ohne unmittelbaren Zwang abgeführt werden kann, ist es erforderlich, die festgenommene Person wenigstens an den Handgelenken zu fesseln, wenn sie sich oder andere angreifen könnte oder wenn Fluchtgefahr besteht. Dabei können der festgenommenen Person die Hände vor oder hinter dem Körper gefesselt werden. Mit den Händen vor dem Körper hat die festgenommene Person noch so viel Bewegungsfreiheit, dass sie sich noch abstützen kann, wenn sie ihr Gleichgewicht verliert oder auch stolpert. Außerdem kann der so Gefesselte zum Transport relativ bequem auf einem Fahrzeugsitz Platz nehmen. Mit den Händen vor dem Körper kann der Gefesselte aber auch noch um sich schlagen oder davonlaufen.

Wenn die Hände hinter dem Körper gefesselt sind, ist der Bewegungsradius der Hände durch die Anatomie der Schultergelenke und der Ellbogengelenke auf einen Bereich um das Becken beschränkt. Somit kann der Gefesselte nicht mehr um sich schlagen und kann auch nicht mehr so leicht davonlaufen, da er ohne den Einsatz seiner Arme sein Gleichgewicht beim Laufen schlechter halten kann. Mit den Händen auf dem Rücken kann der Gefesselte aber in einem Fahrzeugsitz nicht mehr wie vorgesehen Platz nehmen, da durch die Hände ein Raum zwischen einer Rückenlehne des Fahrzeugsitzes und dem Rücken des Gefesselten wie auch zwischen einer Kopfstütze des Fahrzeugsitzes und dem Hinterkopf des Gefesselten verbleibt.

Besonders wenn hohe Kräfte auf das Fahrzeug wirken, beispielsweise bei einem Auffahrunfall, bei plötzlichem Bremsen oder starkem Beschleunigen, fehlt dem so Gefesselten dann der Halt und die Unterstützung durch die Rückenlehne und die Kopfstütze des Fahrzeugsitzes. Dadurch kann er sich erhebliche Wirbelsäulenverletzungen zuziehen.

Denn die hohen Kräfte wirken verzögert auch auf die Fahrzeuginsassen. Bei einer plötzlichen Bremsung beispielsweise wird ein Fahrzeuginsasse mit normaler Haltung und Position auf einem Fahrzeugsitz in Fahrtrichtung zunächst in den Sicherheitsgurt gedrückt. Durch die Elastizität der Fahrzeugstruktur wird der Fahrzeuginsasse danach aus dem Sicherheitsgurt zurückgeschleudert. Dabei wirkt bei einem Dreipunkt-Sicherheitsgurt der obere Gurtabschnitt, der diagonal über den Oberkörper verläuft, unmittelbar auf den Rumpf des Fahrzeuginsassen, sodass er in gleicher Weise wie die Fahrzeugstruktur zurückschlägt. Er trifft dann mit seinem Rücken auf die Rückenlehne und mit dem Hinterkopf auf die Kopfstütze. Da der Rücken und der Hinterkopf in Richtung des Zurückschleuderns zueinander versetzt sind, sind auch die Rückenlehne und die Kopfstütze zueinander entsprechend versetzt angeordnet, sodass der Rücken und der Hinterkopf etwa im gleichen Moment aufgefangen werden. Dadurch bewegt sich der Kopf bezüglich des Rückens in diesem Moment nur geringfügig. Die entsprechende Bewegung des Oberkörpers des Fahrzeuginsassen dreht sich dabei etwa um die Gelenke in seinem Beckenbereich, der sich normalerweise nahe bei der Rückenlehne des Fahrzeugsitzes befinden sollte. Bei einem Auffahrunfall am Heck des Fahrzeugs wird durch die Kopfstütze eine Überdehnung der Halswirbelsäule durch ein Abstützen des Kopfes verhindert.

Bei einem Fahrzeuginsassen, dessen Hände auf dem Rücken fixiert sind, ist der Beckenbereich von der Rückenlehne beabstandet. Dadurch ist der Winkel verändert, in dem sein Rücken und sein Hinterkopf beim Zurückschlagen auf die Rückenlehne und die Kopfstütze treffen. Dies wird bei einigen Fahrzeugsitzen durch anatomische Anpassungen der Rückenlehne verstärkt, die der S-Form der Rückenwirbelsäule folgen und dadurch im Schulterbereich besonders weit zurückversetzt sind. Der Hinterkopf kann lange vor dem Rücken auf die Kopfstütze oder die Rückenlehne treffen und wird gebremst, während sich der Rücken weiter in Richtung der Rückenlehne bewegt. Dabei verschiebt sich der Kopf bezüglich des Rumpfes nach vorne, wodurch die Strukturen der Hals- und Brustwirbelsäule kritischen Scher- und Biegebelastungen ausgesetzt sind. Die Belastungen auf die Strukturen der Hals- und Brustwirbelsäule aufgrund des Abstands zur Rückenlehne sind dabei höher als bei einem Fahrzeuginsassen mit normaler Haltung und Position auf dem Fahrzeugsitz. Somit ist die Gefahr eines Schleudertraumas auch schwereren Grades erhöht. Ebenso ist es möglich, dass der Rumpf frühzeitig durch die Arme oder die Haltung des Rückens abgestützt und gebremst wird, während der Kopf durch seine Massenträgheit weiter nach hinten schleudert. Dadurch sind die Strukturen der Hals- und Brustwirbelsäule ebenfalls Scher- und Biegebelastungen ausgesetzt, die zu schweren Verletzungen dieser Strukturen führen können.

Bei einem Auffahrunfall am Heck des Fahrzeugs fehlt dem gefesselten Fahrzeuginsassen ebenfalls die Unterstützung durch die Kopfstütze. Zusätzlich zu den hierbei normalerweise auftretenden Belastungen wie Stauchen der Wirbelsäule, verschiebt sich der Kopf aufgrund seiner Trägheit bezüglich des Rumpfes nach hinten, wodurch kritische Scher- und Biegebelastungen der Strukturen der Hals- und Brustwirbelsäule auftreten. Diese Belastungen entsprechen denen, die bei einem Fahrzeuginsassen auf einem Fahrzeugsitz ohne Kopfstütze bei einem Auffahrunfall auftreten können.

Bisher hat man sich gelegentlich damit beholfen, dem gefesselten Fahrzeuginsassen den oberen Gurtabschnitt des Dreipunkt-Sicherheitsgurts nicht über die Schulter zu ziehen, sondern ihn seitlich über den Oberarm zu führen. Dadurch kann der Oberkörper der Wirkung des oberen Gurtabschnitts beim Rückfedern beispielsweise nach einer Bremsung teilweise ausweichen und das Zurückschlagen abschwächen. Der Fahrzeuginsasse ist dann aber auch nicht gut davor geschützt, gegen einen Vordersitz zu schlagen. Jedoch ist nach Ansicht einiger Gerichte der Sicherheitsgurt so zu verwenden, dass er die ihm zugewiesene Schutzfunktion im Schulter - und Beckenbereich des Fahrzeuginsassen erfüllen kann. Dazu sollte der Schultergurt auch tatsächlich über die Schulter geführt werden. Unter Umständen gilt nur ein Sicherheitsgurt, der tatsächlich über die Schulter geführt ist als angelegt.

Auch wenn die gefesselte Person bei einer Festnahme in der Regel selbst durch ihr Verhalten die Fesselung verursacht, darf ihre Sicherheit beim Transport nicht vernachlässigt werden. Dies ist nicht nur im allgemeinen Anspruch eines jeden auf körperliche Unversehrtheit begründet, der sich auch im gesetzlichen Schutz vor fahrlässiger Körperverletzung äußert. Es ist auch ein Gebot der Verhältnismäßigkeit, wonach dem Festgenommenen bei der Festnahme kein Schaden entstehen darf, der unverhältnismäßig hoch im Vergleich zum Grund für die Festnahme ist.

Die Erfindung möchte hier Abhilfe schaffen.

Die US 2004/041451 A1 offenbart einen Fahrzeugsitzadapter mit dem Merkmalen des Oberbegriffs der Patentanspruches 1 der vorliegenden Erfindung und insbesondere eine Lendenwirbelstütze ("lumbar support") für einen Fahrzeugsitz, um Polizeibeamte vor dienstbedingten Rückenbeschwerden zu bewahren. Mit einer Aussparung im unteren Rückenbereich wird zusätzlicher Platz für am Gürtel befestigte Utensilien (wie Taschenlampe oder Ersatz-Schusswaffen) geschaffen, um diese auf längeren Patrouillen rückenschonend zu verstauen. Diese Utensilien drücken in der Folge nicht auf den Lendenwirbelbereich des Polizeibeamten.

### Kurzbeschreibung der Erfindung

Die Erfindung stellt nach einem Aspekt einen Fahrzeugsitzadapter gemäß dem Patentanspruch 1 bereit. Weitere Aspekte und Merkmale der Erfindung ergeben sich aus den abhängigen Ansprüchen, der nachfolgenden Beschreibung bevorzugter Ausführungsbeispiele und der beigefügten Zeichnung.

### Kurzbeschreibung der Figuren

Ausführungsbeispiele der Erfindung werden nun und unter Bezugnahme auf die angefügten Figuren beschrieben, von denen zeigen schematisch:
Fig. 1A eine Vorderansicht eines Fahrzeugsitzadapters gemäß der Erfindung;
Fig. 1B eine Seitenansicht eines Fahrzeugsitzadapters gemäß der Erfindung;
Fig. 2A eine perspektivische Ansicht des Fahrzeugsitzadapters, das auf einem Fahrzeugsitz angeordnet ist;
Fig. 2B eine Detailansicht von vorne einer unteren Seite des Fahrzeugsitzadapters, das auf einem Fahrzeugsitz angeordnet ist;
Fig. 2C eine Seitenansicht eines Fahrzeugsitzadapters, das auf einem Fahrzeugsitz angeordnet ist;
Fig. 3A eine perspektivische Ansicht eines Fahrzeugsitzadapters, das auf einem Fahrzeugsitz angeordnet ist, und an dem sich ein Fahrzeuginsasse anlehnt;
Fig. 3B eine Seitenansicht eines Fahrzeugsitzadapters, das auf einem Fahrzeugsitz angeordnet ist und an dem sich ein Fahrzeuginsasse anlehnt;
Fig. 3C eine Seitenansicht eines Fahrzeugsitzadapters, das auf einem Fahrzeugsitz angeordnet ist, an dem sich ein Fahrzeuginsasse anlehnt, und bei dem zur Verdeutlichung der dem Betrachter zugewandte Arm weggelassen ist; und
Fig. 3D Ansicht des Fahrzeugsitzadapters von hinten, wobei das Fahrzeugsitzadapter an einem Fahrzeugsitz angeordnet ist, in dem sich ein Fahrzeuginsasse befindet, wobei zur Verdeutlichung die Rückenlehne des Fahrzeugsitzes weggelassen ist.

### Beschreibung der Ausführungsbeispiele

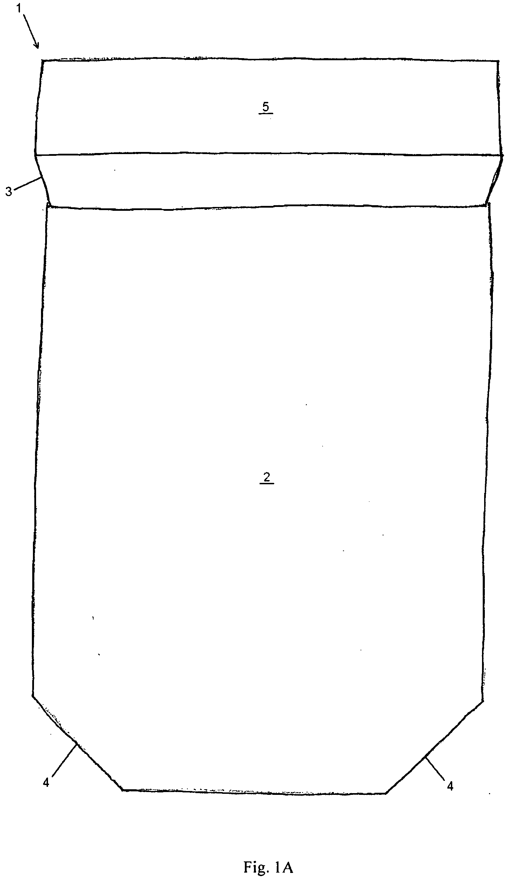

Fig. 1A zeigt einen Fahrzeugsitzadapter 1 zur Anordnung auf einem Fahrzeugsitz in einer Darstellung von vorne. Der Fahrzeugsitzadapter 1 umfasst ein Rückenteil 2 und eine Befestigungsstruktur 3.

Vor einer näheren Beschreibung der dargestellten Ausführungsbeispiele folgen zunächst einige allgemeine Aspekte zu dem Fahrzeugsitzadapter. Richtungsangaben wie oben, unten, seitlich, rechts, links, vorne oder hinten beziehen sich im folgenden auf einen Fahrzeugsitzadapter, der in bestimmungsgemäßer Anordnung auf einem Fahrzeugsitz angeordnet ist, der in Fahrtrichtung orientiert ist.

Ein Fahrzeugsitzadapter für einen Fahrzeugsitz eines Fahrzeuges umfasst eine Befestigungseinrichtung zur Befestigung an einem Fahrzeugsitz, und einen Hauptkörper mit einer Hauptkörper-Fahrzeugsitzseite und einer Hauptkörper-Personenseite sowie einer Hauptkörper-Fahrzeugsitzflächenseite und einer Hauptkörper-Fahrzeugsitzkopfendenseite, wobei der Abstand zwischen der Hauptkörper-Fahrzeugsitzflächenseite und der Hauptkörper-Fahrzeugsitzkopfendenseite kleiner als der Abstand zwischen der Sitzfläche des Fahrzeugsitzes und dem Fahrzeugsitzkopfende des Fahrzeugsitzes ist und/oder die Befestigungseinrichtung für eine Befestigung des Hauptkörpers an dem Fahrzeugsitz derart ausgelegt ist, dass die Hauptkörper-Fahrzeugsitzflächenseite von der Fahrzeugsitzfläche des Fahrzeugsitzes beabstandet ist, sodass zwischen der Hauptkörper-Fahrzeugsitzflächenseite und der Fahrzeugsitzflächenseite des Fahrzeugsitzes ein Raum schaffbar ist.

In einigen Ausführungsbeispielen ist die Befestigungseinrichtung ausgelegt, den Hauptkörper variabel beabstandet von der Fahrzeugsitzfläche anzuordnen.

In weiteren Ausführungsbeispielen umfasst die Hauptkörper- Fahrzeugsitzkopfendenseite einen Kopfteil, der eine Kopfteil- Personenseite und eine Kopfteil-Fahrzeugsitzflächenseite aufweist und der Abstand zwischen diesen wenigstens teilweise größer als der Abstand zwischen der Hauptkörper-Personenseite und der Hauptkörper-Fahrzeugsitzseite ist.

In einigen Ausführungsbeispielen ist der Abstand zwischen der Kopfteil-Personenseite und der Kopfteil-Fahrzeugsitzflächenseite etwa um soviel größer als der Abstand zwischen der Hauptkörper-Personenseite und der Hauptkörper-Fahrzeugsitzseite, wie der Rücken (104) eines Fahrzeuginsassen (100) in aufrechter Sitzposition weiter nach hinten ragt als der Hinterkopf des Fahrzeuginsassen (100). Gemäß der Erfindung umfasst die Befestigungseinrichtung ein zum Umfassen der Fahrzeugsitzkopfendenseite des Fahrzeugsitzes ausgeführtes Befestigungsmittel.

In einigen Ausführungsbeispielen umfasst die Befestigungseinrichtung einen Klettverschluss. Der Klettverschluss umfasst ein Haken- und ein Flauschband, ein Pilzkopfband und ein Veloursband, ein Pilzkopfband und ein Flauschband oder zwei Pilzkopfbänder, von denen jeweils ein Band an der Hauptkörper-Fahrzeugsitzseite angeordnet ist und das jeweils andere Band an dem Fahrzeugsitz anbringbar ist, sodass sich der Fahrzeugsitzadapter mittels des Klettverschlusses an dem Fahrzeugsitz befestigen lässt. In einigen Ausführungsbeispielen umfasst die Befestigungseinrichtung einen Distanzhalter an der Hauptkörper-Fahrzeugsitzflächenseite, der einstellbar ist, sodass der Fahrzeugsitzadapter auf die Fahrzeugsitzfläche stellbar ist. In einigen Ausführungsbeispielen hat der Distanzhalter die Form eines Mittelstegs, von zwei seitlichen Stegen oder ist als eine Verlängerung des Fahrzeugsitzadapters ausgeführt. Die Stege und die Verlängerung sind in den Ausführungsbeispielen so beschaffen, dass der Raum zwischen der Hauptkörper-Fahrzeugsitzflächenseite und der Fahrzeugsitzflächenseite des Fahrzeugsitzes zu den Seiten im wesentlichen offen bleibt und der Distanzhalter nur einen kleinen Bereich des Raums einnimmt. In einigen Ausführungsbeispielen ist der Distanzhalter in dem Fahrzeugsitzadapter versenkbar.

In einigen Ausführungsbeispielen ist das Befestigungsmittel ein Gurt, ein Seil oder eine Haube, die an dem Fahrzeugsitzadapter nach unten offen angebracht ist und die ausgestaltet ist über das Fahrzeugsitzkopfende gestülpt zu werden. Gemäß der Erfindung ist das Profilkissen etwa quaderförmig und ist bemessen, sich bei bestimmungsgemäßer Anordnung in etwa von einem Beckenbereich des Fahrzeuginsassen bis zu einem Kopfbereich des Fahrzeuginsassen zu erstrecken.

In weiteren Ausführungsbeispielen ist das Profilkissen bemessen, sich bei bestimmungsgemäßer Anordnung etwa über die Breite des Rückens des Fahrzeuginsassen zu erstrecken.

In einigen Ausführungsbeispielen ist das Profilkissen bemessen, bei bestimmungsgemäßer Anordnung einen Abstand vom Rücken des Fahrzeuginsassen zur Rückenlehne des Fahrzeugsitzes einzustellen, der etwa der Breite oder der Dicke einer flachen Hand entspricht.

In einigen Ausführungsbeispielen weisen untere seitliche Kanten jeweils eine abgeschrägte Fläche auf.

In einigen Ausführungsbeispielen ist das Material, aus dem das Profilkissen im wesentlichen hergestellt ist, nachgiebig und/oder elastisch.

In einigen Ausführungsbeispielen ist das Material, aus dem das Profilkissen im wesentlichen hergestellt ist, ein Schaumstoffmaterial.

In besonderen Ausführungsbeispielen ist das Schaumstoffmaterial geschlossenporig.

In einigen Ausführungsbeispielen weist das Material, aus dem das Profilkissen im wesentlichen hergestellt ist, eine Dichte auf, die geringer als die Dichte von Wasser ist.

In einigen Ausführungsbeispielen ist das Material, aus dem das Profilkissen im wesentlichen hergestellt ist, schwerentflammbar.

Nach einem nicht erfindungsgemäßen Aspekt umfasst ein Fahrzeugsitz eine Fahrzeugsitzfläche, die sich im wesentlichen waagrecht erstreckt, und eine Rückenlehne, die eine Rückenlehnenfläche aufweist, die sich zu der Fahrzeugsitzfläche etwa senkrecht erstreckt, wobei die Rückenlehnenfläche von der Fahrzeugsitzfläche beabstandet ist, sodass zwischen der Rückenlehnenfläche und der Fahrzeugsitzflächenseite ein Ausschnitt angeordnet ist.

Das Rückenteil 2 in Fig. 1A bildet einen Hauptkörper des Fahrzeugsitzadapters 1. Der Hauptkörper umfasst eine Hauptkörper-Fahrzeugsitzseite an einer hinteren Seite des Rückenteils 2, eine Hauptkörper-Personenseite an einer vorderen Seite des Rückenteils 2, eine Hauptkörper-Fahrzeugsitzflächenseite an einer unteren Seite des Rückenteils 2 und einer Hauptkörper-Fahrzeugsitzkopfendenseite an einer oberen Seite des Rückenteils 2. Das Rückenteil 2 etwa quaderförmig und ist in seiner Höhe so bemessen, dass es sich bei einem durchschnittlichen Fahrzeuginsassen etwa von einem Beckenbereich bis zu einem Kopfbereich erstreckt. Dabei ist der Abstand zwischen der Hauptkörper-Fahrzeugsitzflächenseite und der Hauptkörper-Fahrzeugsitzkopfendenseite kleiner als der Abstand zwischen der Sitzfläche eines Fahrzeugsitzes und einem Fahrzeugsitzkopfende des Fahrzeugsitzes. Dieser Abstand beträgt beispielsweise zwischen 71 cm und 74 cm, bevorzugt etwa 72,35 cm. Das Rückenteil 2 ist etwa so breit wie die Rückenlehne eines Fahrzeugsitzes oder auch der Rücken eines Fahrzeuginsassen. Beispielsweise ist das Rückenteil 2 etwa zwischen 35 cm und 38 cm breit, bevorzugt etwa 36,5 cm. In dem dargestellten Ausführungsbeispiel weist der Fahrzeugsitzadapter 1 an den unteren seitlichen Kanten jeweils eine abgeschrägte Fläche 4 auf, deren Funktion weiter unten näher erläutert werden wird. An einem oberen Bereich weist der Fahrzeugsitzadapter 1 ein Kopfteil 5 auf, das sich über die Breite des Fahrzeugsitzadapters 1 erstreckt und das eine größere Dicke als das Rückenteil 2 aufweist. Dabei fluchten in dem dargestellten Ausführungsbeispiel jeweils die linke, die rechte und die hintere Seite (in der Darstellung verdeckt) des Kopfteils 5 und des Rückenteils 2. Die vordere Seite des Kopfteils 5 ragt weiter nach vorne als die vordere Seite des Rückenteils 2. In einem anderen Ausführungsbeispiel ragen sowohl die vordere Seite als auch die hintere Seite des Kopfteils weiter nach vorne bzw. nach hinten als die vordere Seite bzw. die hintere Seite des Rückenteils.

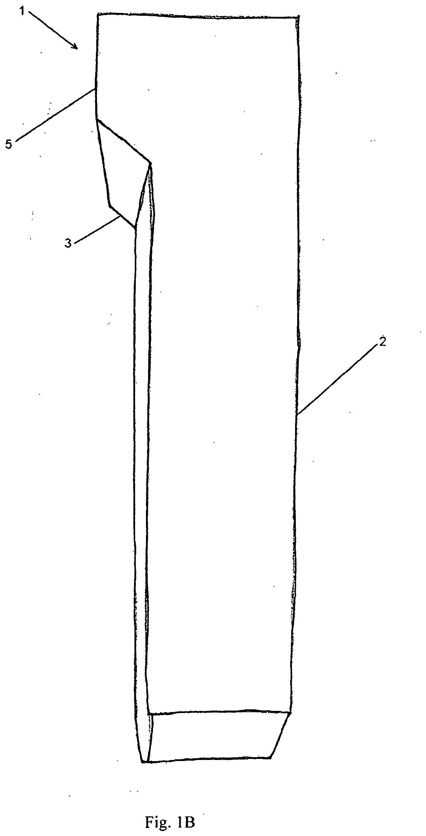

Die Befestigungsstruktur 3 ist ausgestaltet, den Fahrzeugsitzadapter 1 in einer bestimmten Höhe über einer Sitzfläche eines Fahrzeugsitzes abzustützen. Dazu ist die Befestigungsstruktur 3 ausgestaltet, mit einem Befestigungsmittel in Eingriff zu kommen. In Fig. 1A ist die Befestigungsstruktur 3 erfindungsgemäß als Auskragung ausgeführt, wie mit Bezug auf Fig. 1B näher erläutert werden wird.

Fig. 1B zeigt den Fahrzeugsitzadapter 1 in einer Seitenansicht. In dem dargestellten Ausführungsbeispiel entspricht der Abstand zwischen der Hauptkörper-Fahrzeugsitzseite an der hinteren Seite des Rückenteils 2 und der Hauptkörper-Personenseite an der vorderen Seite des Rückenteils 2 etwa der Breite einer Hand vom Daumen bis zum kleinen Finger, wie weiter unten erläutert werden wird. Dieser Hauptkörper-Abstand beträgt in einem Ausführungsbeispiel etwa 8 cm bis 16 cm, bevorzugt 11 cm. Das Kopfteil 5 weist eine Kopfteil-Personenseite und eine Kopfteil-Fahrzeugsitzflächenseite auf, wobei ein Kopfteil-Abstand zwischen der Kopfteil-Personenseite und der Kopfteil-Fahrzeugsitzflächenseite um 10% bis 50% größer als der Hauptkörper-Abstand ist. In einem Ausführungsbeispiel beträgt der Kopfteil-Abstand zwischen 9 cm und 25 cm, bevorzugt 15 cm. Durch die erhöhte Dicke des Kopfteils 5 ist der Fahrzeugsitzadapter 1 an den Vorversatz des Hinterkopfes eines Fahrzeuginsassen zu dessen Rücken angepasst. In einem anderen Ausführungsbeispiel entspricht die Dicke des Rückenteils 2 der Höhe einer flachen Hand. In diesem Ausführungsbeispiel ist das Kopfteil 5 um ein Vielfaches dicker als das Rückenteil 2, um den Vorversatz des Hinterkopfes zum Rücken auszugleichen.

Am Übergang zwischen dem Kopfteil 5 und dem Rückenteil 2 ist die Befestigungsstruktur 3 in Form einer Auskragung angeordnet. Die Auskragung der Befestigungsstruktur 3 ist so ausgestaltet, dass wenn ein Befestigungsmittel, beispielsweise ein Seil oder ein Gurt, an einem Fahrzeugsitz befestigt ist und eine Schlaufe bildet und der Fahrzeugsitzadapter 1 durch die Schlaufe geschoben wird, die Auskragung der Befestigungsstruktur 3 ein Durchrutschen des Fahrzeugsitzadapters 1 nach unten verhindert. Die Befestigungsstruktur 3 ist in dem dargestellten Ausführungsbeispiel in einem oberen Bereich des Fahrzeugsitzadapters 1 angeordnet, beispielsweise in einem oberen Viertel des Fahrzeugsitzadapters 1.

Die Auskragung weist eine rechteckige Oberfläche auf, deren eine erste Kante sich über die Breite des Rückenteils 2 erstreckt und dessen Breite aufweist und deren eine zweite Kante sich rechtwinklig zur ersten Kante zwischen der vorderen Seite des Rückenteils 2 und der vorderen Seite des Kopfteils 5 erstreckt und eine Breite von etwa 5 cm aufweist. Die Oberfläche der Auskragung steht in einem Ausführungsbeispiel in einem Winkel von 130° zu der vorderen Seite des Rückenteils 2. Die vordere Seite des Rückenteils 2 und die vordere Seite des Kopfteils 5 sind in einigen Ausführungsbeispielen parallel zu der Hauptkörper-Fahrzeugsitzseite an der hinteren Seite des Rückenteils 2. Die vordere Seite des Kopfteils 5 weist in einem Ausführungsbeispiel eine Höhe von 8 cm auf.

In anderen nicht dargestellten Ausführungsbeispielen ist die Befestigungsstruktur als Aussparung in dem Fahrzeugsitzadapter angeordnet. In einigen dieser Ausführungsbeispiele ist die Aussparung in Form von einem oder mehr Löchern ausgeführt, die den Fahrzeugsitzadapter von hinten nach vorne oder von rechts nach links durchbrechen. In anderen Ausführungsbeispielen ist die Aussparung in Form wenigstens einer Einkerbung ausgeführt, die beispielsweise paarweise seitlich angeordnet ist und/oder sich an einer Vorderseite des Fahrzeugsitzadapters von rechts nach links erstreckt. Gemäß der Erfindung sind ein Gurt oder ein Seil als Befestigungsmittel vorgesehen. Der Gurt oder das Seil lassen sich in diesen Ausführungsbeispielen durch die Aussparung führen. In weiteren Ausführungsbeispielen ist die Befestigungsstruktur als wenigstens eine Schlaufe oder Klammer ausgeführt, die ausgestaltet sind, direkt an dem Fahrzeugsitz befestigt zu werden oder in ein Befestigungsmittel einzugreifen.

In den Dargestellten Ausführungsbeispielen sind das Kopfteil 5 und das Rückenteil 2 einstückig ausgeführt. In weiteren Ausführungsbeispielen sind das Kopfteil und das Rückenteil unabhängig voneinander auf einem Fahrzeugsitz anzuordnen und zu befestigen. In diesen Ausführungsbeispielen weisen das Kopfteil und das Rückenteil jeweils Befestigungsstrukturen auf. In weiteren Ausführungsbeispielen sind das Kopfteil und das Rückenteil miteinander verbunden und sind in einigen Ausführungsbeispielen ausgestaltet, in ihrem Abstand zueinander eingestellt zu werden.

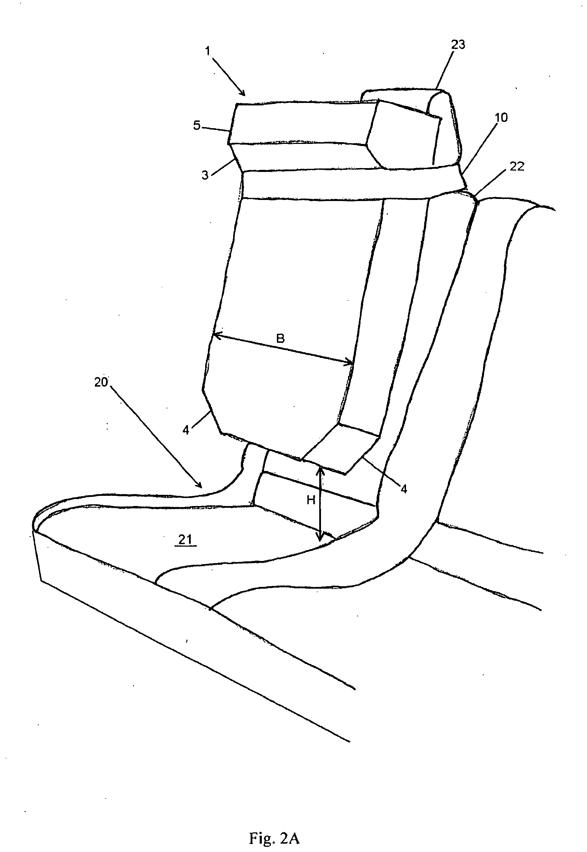

Fig. 2A zeigt den erfindungsgemäßen Fahrzeugsitzadapter 1 in bestimmungsgemäßer Anordnung an einem Fahrzeugsitz 20. Der Fahrzeugsitzadapter 1 ist mittels eines Befestigungsmittels 10 an dem Fahrzeugsitz 20 befestigt. Das Befestigungsmittel 10 und die Befestigungsstruktur 3 bilden eine Befestigungseinrichtung. Dabei ist das Kopfteil 5, unter dem sich die Auskragung als Befestigungsstruktur 3 befindet, von einer Rückenlehne 22 des Fahrzeugsitzes 20 abgewandt. Das Kopfteil 5 des Fahrzeugsitzadapters 1 ist in Nähe einer Kopfstütze 23 an der Fahrzeugsitzkopfendenseite des Fahrzeugsitzes 20 angeordnet. Das Befestigungsmittel 10 ist zum Umfassen der Fahrzeugsitzkopfendenseite des Fahrzeugsitzes ausgeführt und ist in dem dargestellten Ausführungsbeispiel als Gurt ausgeführt, der um die Kopfstütze 23 des Fahrzeugsitzes 20 gelegt ist und an der Befestigungsstruktur 3 in Eingriff steht. Durch die Auskragung wird ein Durchrutschen des Fahrzeugsitzadapters 1 nach unten verhindert. Der Fahrzeugsitzadapter 1 ist so angeordnet und befestigt, dass zwischen der Hauptkörper-Fahrzeugsitzflächenseite des Fahrzeugsitzadapters 1 und einer Sitzfläche 21 des Fahrzeugsitzes 20 ein Raum mit der Höhe H besteht. Insbesondere ist dazu die Befestigungseinrichtung für eine Befestigung des Hauptkörpers an dem Fahrzeugsitz so ausgelegt, dass die Hauptkörper-Fahrzeugsitzflächenseite von der Fahrzeugsitzfläche des Fahrzeugsitzes beabstandet ist, sodass zwischen der Hauptkörper-Fahrzeugsitzflächenseite und der Fahrzeugsitzflächenseite des Fahrzeugsitzes ein Raum mit der Höhe H schaffbar ist. Der Raum erstreckt sich über die gesamte Breite B des Fahrzeugsitzes 20 und des Fahrzeugsitzadapters 1 und ist zu den Seiten offen. Durch die abgeschrägten Flächen 4 an den unteren seitlichen Kanten des Fahrzeugsitzadapters 1 vergrößert sich der Raum unter dem Fahrzeugsitzadapter zu den Seiten des Fahrzeugsitzadapters 1.

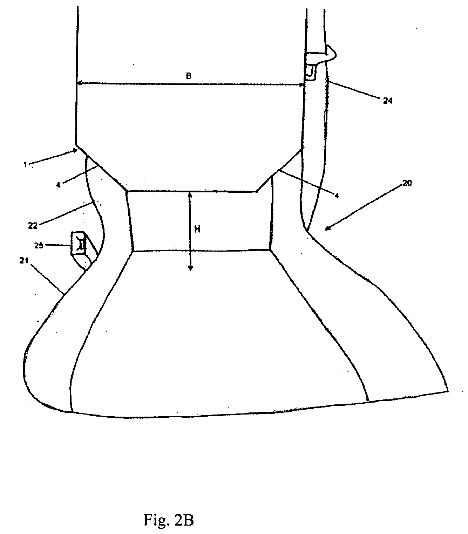

Fig. 2B zeigt eine Detailansicht eines unteren Bereichs des Fahrzeugsitzadapters 1, der an der Rückenlehne 22 des Fahrzeugsitzes 20 angeordnet ist. In der Darstellung von Fig. 2B ist eine vordere Unterkante des Fahrzeugsitzadapters über der Sitzfläche 21 des Fahrzeugsitzes 20 zu sehen. Durch die abgeschrägten Flächen 4 an den unteren seitlichen Kanten des Fahrzeugsitzadapters 1 gemäß dem dargestellten Ausführungsbeispiel erhält die vordere Unterkante des Fahrzeugsitzadapters 1 eine konvexe Form, bei der ein mittlerer Abschnitt den Fahrzeugsitzadapter 1 nach unten abschließt und seitliche Abschnitte sich von dem mittleren Abschnitt zur jeweiligen Seite schräg nach oben erstrecken. Dadurch entsteht zwischen der Unterseite des Fahrzeugsitzadapters 1 und der Sitzfläche 21 ein Raum der Höhe H, der sich über eine Breite B des Fahrzeugsitzadapters 1 erstreckt und sich zu den Seiten aufweitet. In dem Raum unter dem Fahrzeugsitzadapter 1 kann ein Fahrzeuginsasse, der auf dem Fahrzeugsitz 20 Platz genommen hat, seine Hände unter dem Fahrzeugsitzadapter 1 platzieren, wobei sich seine Unterarme dann von den Händen unter dem Fahrzeugsitzadapter 1 bis zu den Ellbogen seitlich des Körpers schräg nach vorne oben erstrecken. Die abgeschrägten Flächen 4 erlauben, den mittleren Abschnitt bis auf den Raum für die Hände hinunter zu ziehen, ohne die Arme des Fahrzeuginsassen zu beengen. Dadurch reicht das Rückenteil 2 bis zum Beckenbereich des Fahrzeuginsassen und kann den Rücken fast über dessen gesamte Länge abstützen.

In einigen Ausführungsbeispielen ist der mittlere Abschnitt etwa 21,50 cm breit. In weiteren Ausführungsbeispielen erstrecken sich die seitlichen Abschnitte über 10,50 cm schräg nach oben. In einigen Ausführungsbeispielen steht der mittlere Abschnitt in einem Winkel von jeweils 90° zu den seitlichen Flächen des Hauptkörpers. Die seitlichen Abschnitte stehen in weiteren Ausführungsbeispielen jeweils in einem Winkel von 45° zu dem mittleren Abschnitt.

In dem dargestellten Ausführungsbeispiel ist die Breite B des Fahrzeugsitzadapters 1 so gewählt, dass er etwa zwischen dem Bereich eines unteren und eines oberen Befestigungspunktes des Sicherheitsgurts 24 auf der einen Seite und einem Gurtschloss 25 auf der anderen Seite passt. Dadurch ist der Fahrzeugsitzadapter 1 zusätzlich gegen ein seitliches Verrutschen gesichert. Außerdem lässt sich der Gurt über die Schulter des Fahrzeuginsassen legen. In anderen Ausführungsbeispielen ist im Bereich des oberen Befestigungspunktes eine Aussparung im Fahrzeugsitzadapter vorgesehen, durch die der Sicherheitsgurt zur Schulter geführt werden kann.

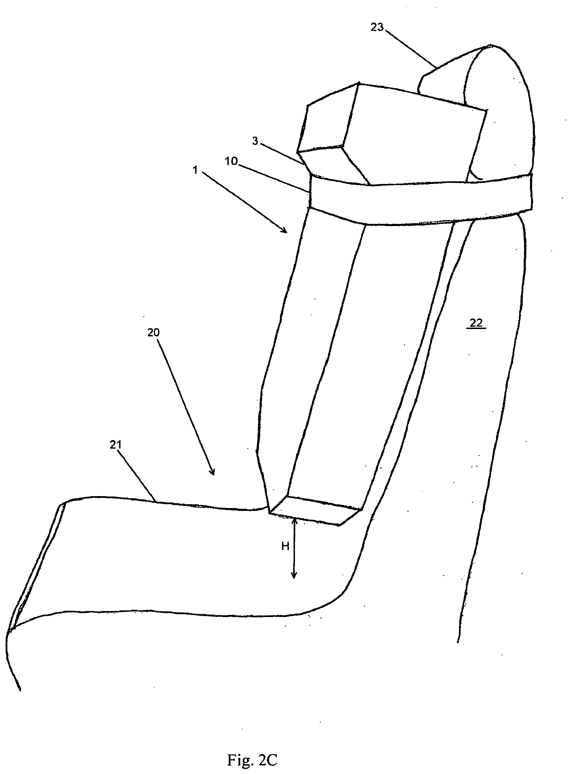

Fig. 2C zeigt den Fahrzeugsitz 20, an dem der Fahrzeugsitzadapter 1 befestigt ist. In dem dargestellten Ausführungsbeispiel ist das Befestigungsmittel ein Gurt 10, der unter der Befestigungsstruktur 3 des Fahrzeugsitzadapters 1 in Eingriff steht, so um die Kopfstütze 23 des Fahrzeugsitzes 20 gelegt, dass der Gurt 10 auf einer oberen Kante der Rückenlehne 22 aufliegt. Auf diese Weise ist der Gurt 10 und somit der Fahrzeugsitzadapter 1 gegen ein Verrutschen nach unten gesichert. In einem anderen Ausführungsbeispiel ist der Gurt 10 eng um die Kopfstütze 23 und der Fahrzeugsitzadapter 1 gespannt, sodass ein Abstützen auf der Rückenlehne 22 unnötig ist. In dem Ausführungsbeispiel kann der Gurt 10 mit einem Abstand zur Rückenlehne 22 angeordnet werden, sodass die Höhe H des Fahrzeugsitzadapters 1 über der Sitzfläche 21 des Fahrzeugsitzes 20 durch eine Höhenverstellung der Kopfstütze 23 einstellbar ist.

Auch in weiteren Ausführungsbeispielen ist die Befestigungseinrichtung ausgelegt, den Hauptkörper variabel beabstandet von der Fahrzeugsitzflächenseite anzuordnen

In der dargestellten Anordnung des Fahrzeugsitzadapters auf dem Fahrzeugsitz 20 kann der Fahrzeugsitzadapter 1 auch untergebracht sein, solange er nicht verwendet wird.

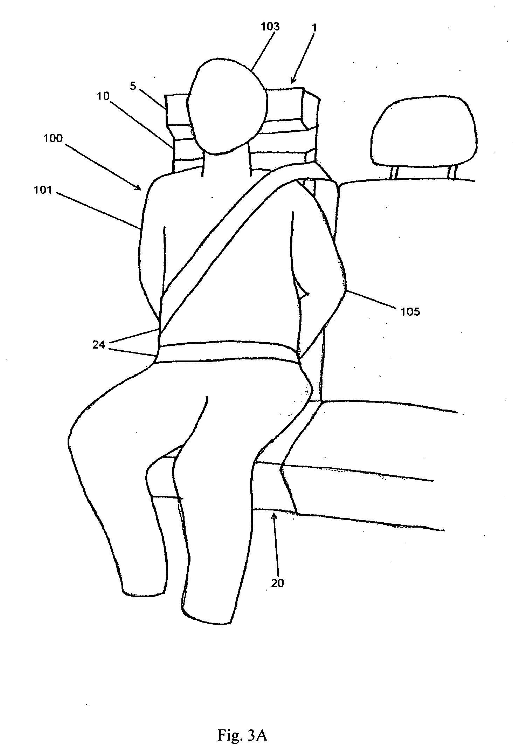

Fig. 3A zeigt eine perspektivische Ansicht eines Fahrzeuginsassen 100, dessen Arme 101 auf dem Rücken fixiert sind und der auf dem Fahrzeugsitz 20 mit dem erfindungsgemäßen Fahrzeugsitzadapter 1 Platz genommen hat. Der Fahrzeugsitzadapter ist mit dem Gurt 10 gesichert, der in die Befestigungsstruktur 3 eingreift. Der Gurt ist beispielsweise um die Kopfstütze (in der Darstellung verdeckt) des Fahrzeugsitzes 20 gelegt und ist so am Fahrzeugsitz 20 befestigt. Der Fahrzeuginsasse ist mit einem Dreipunktgurt 24 gesichert. Der Kopf 103 des Fahrzeuginsassen 100 befindet sich etwa auf Höhe des Kopfteils 5. Der Fahrzeugsitzadapter 1 ist in horizontaler Richtung etwa zwischen den Gurtbeschlägen in einem oberen Bereich und einem unteren Bereich der Rückenlehne des Fahrzeugsitzes 20 und dem Gurtschloss auf der gegenüberliegenden Seite der Rückenlehne des Fahrzeugsitzes 20 angeordnet. In diesem Ausführungsbeispiel ist die Funktion des Gurtes weniger beeinträchtigt. Dabei überragen die Schultern des Fahrzeuginsassen den Fahrzeugsitzadapter zu den Seiten, so dass die Ellbogen 105 des Fahrzeuginsassen seitlich am Fahrzeugsitzadapter 1 angeordnet werden können.

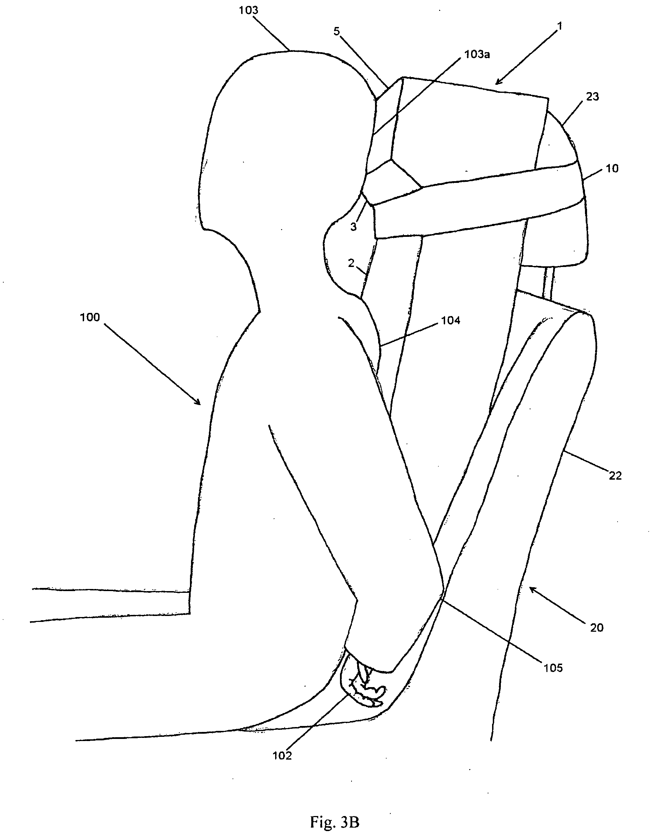

Fig. 3B zeigt den Fahrzeuginsassen 100 auf dem Fahrzeugsitz 20 von der Seite. Der Fahrzeugsitzadapter 1 ist zwischen dem Rücken des Fahrzeuginsassen 100 und der Rückenlehne 22 des Fahrzeugsitzes 20 angeordnet. Dazu ist der Gurt 10 um den Fahrzeugsitzadapter 1 und die Kopfstütze 23 gespannt, wobei der Gurt 10 in die Befestigungsstruktur 3 des Fahrzeugsitzadapters 1 eingreift, so dass der Fahrzeugsitzadapter 1 am Absinken gehindert ist. Der Gurt 10 ist um die Kopfstütze 23 gespannt, sodass der Gurt 10 und der Fahrzeugsitzadapter 1 nicht absinken. Dazu ist der Gurt 10 in einigen Ausführungsbeispielen elastisch. In weiteren Ausführungsbeispielen wird der Gurt 10 durch eine Elastizität des Fahrzeugsitzadapters 1 um die Kopfstütze 23 gespannt. In weiteren Ausführungsbeispielen ist der Gurt 10 mit einer Gurtschließe (nicht dargestellt) versehen und ist ausgestaltet eng um den Fahrzeugsitzadapter 1 und die Kopfstütze 23 gelegt zu werden, wobei allein eine Polsterung der Kopfstütze 23 die Elastizität bereitstellt, den Gurt 10 mit ausreichend Reibung um die Kopfstütze 23 zu legen, sodass der Fahrzeugsitzadapter 1 nicht absinkt. Die Höhe des Kopfteils 5 und des Fahrzeugsitzadapters 1 lässt sich durch Verstellen der Kopfstütze 23 auf eine Größe des Fahrzeuginsassen 100 einstellen. Die Ellbogen 105 des Fahrzeuginsassen 100 befinden sich in Fig. 3B seitlich des Fahrzeugsitzadapters 1. Die Hände des Fahrzeuginsassen 100 befinden sich unterhalb des Fahrzeugsitzadapters 1. In einem Ausführungsbeispiel weist der Gurt eine Breite von 5 cm auf.

Wie in Fig. 3B zu sehen, ragt der Hinterkopf 103a des Fahrzeuginsassen weniger weit nach hinten als sein Rücken 104. Die vordere Seite des Kopfteils 5 erstreckt sich etwa um soviel weiter nach vorne zum Fahrzeuginsassen 100 als die vordere Seite des Rückenteils 2, wie der Rücken 104 des Fahrzeuginsassen 100 im Profil den Hinterkopf 103a nach hinten überragt.

Bei starkem Verzögern des Autos, d.h. bei Vollbremsungen oder beim Aufprall des Fahrzeugs auf ein Hindernis, schnellt der Kopf 103 des Fahrzeuginsassen 100 aufgrund der Massenträgheit zunächst nach vorne und schlägt dann im Moment des vollständigen Fahrzeugstillstandes aufgrund der elastischen Verformung der Fahrzeugstruktur bei der Verzögerung wieder nach hinten. Durch das Kopfteil 5 wird der Hinterkopf 103a des Fahrzeuginsassen 100 etwa im gleichen Moment aufgefangen und abgebremst wie der Rücken 104. Der Kopf 103 wird so in einer etwa neutralen Stellung bezüglich des Rückens 104 abgebremst und ein Überstrecken der Hals- und Brustwirbel wird vermieden. Ebenso übernimmt das Kopfteil 5 die Funktion der Kopfstütze 23 bei einem Auffahrunfall, sodass eine Verschiebung des Kopfes 103 bezüglich des Rumpfes vermindert wird. Durch den Fahrzeugsitzadapter 1 ist daher ein Fahrzeuginsasse 100, von dem wenigstens eine Hand hinter dem Rücken 104 fixiert ist, nur noch insoweit der Gefahr eines Schleudertraumas ausgesetzt, wie ein Fahrzeuginsasse mit normaler Haltung und Position auf einem Fahrzeugsitz.

Wenn der Fahrzeugsitzadapter 1 auf dem Fahrzeugsitz 20 angeordnet ist und der Fahrzeuginsasse 100 gegen den Fahrzeugsitzadapter 1 lehnt, federn die Rückenlehne 22 und der Fahrzeugsitzadapter 1 ein. Daher ist in einem Ausführungsbeispiel das Rückenteil 2 des Fahrzeugsitzadapters 1 ausreichend dick bemessen, so dass zwischen dem Rücken des Fahrzeuginsassen, der unteren Seite des Fahrzeugsitzadapters 1, der Rückenlehne 22 des Fahrzeugsitzes 20 und der Sitzfläche 21 des Fahrzeugsitzes 20 Raum für die Hände 102 und die Unterarme bleibt.

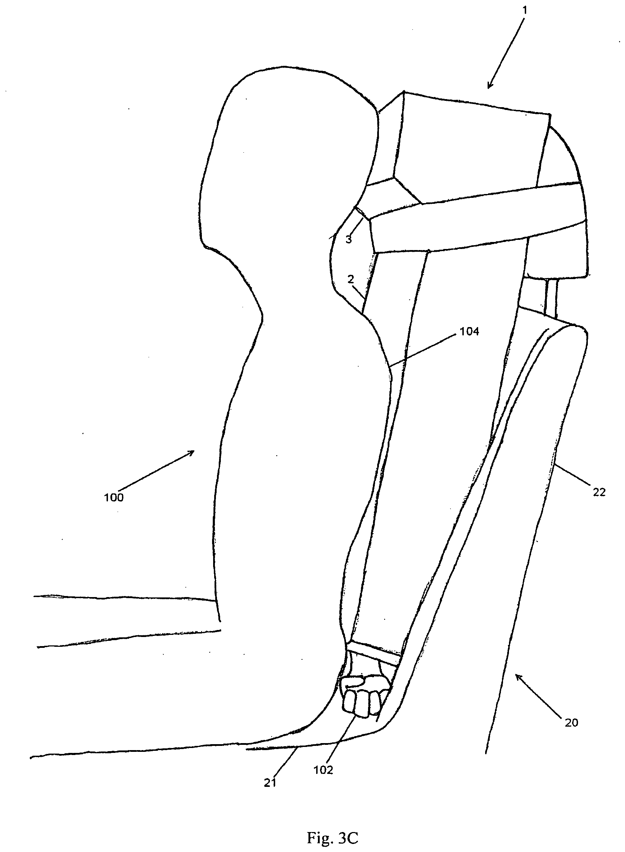

Fig. 3C zeigt eine Seitenansicht des Fahrzeugsitzadapters 1, der auf dem Fahrzeugsitz 20 angeordnet ist, an dem sich ein Fahrzeuginsasse 100 anlehnt, bei dem zur Verdeutlichung der dem Betrachter zugewandte Arm weggelassen ist. Zwischen dem Rücken 104 und der Rückenlehne 22 und unter dem Fahrzeugsitzadapter 1 befindet sich eine Hand 102 des Fahrzeuginsassen 100. Das Rückenteil 2 des Fahrzeugsitzadapters 1 ist also zwischen der Befestigungsstruktur 3 und der Unterseite des Fahrzeugsitzadapters 1 so bemessen, dass zwischen der Sitzfläche 21 und der Unterseite des Fahrzeugsitzadapters 1 wenigstens die Hand 102 Platz findet. In weiteren Ausführungsbeispielen ist das Rückenteil 2 so dick, dass zwischen dem Rücken 104 des Fahrzeuginsassen 100 und der Rückenlehne 22 in etwa eine Hand in jeder Position Platz findet, wobei ein Einfedern der Rückenlehne 22 und des Rückenteils 2 berücksichtigt ist. Dazu entspricht die Dicke des Rückenteils 2 beim Einfedern etwa der Breite einer Hand. Die Breite einer Hand bemisst sich dabei entlang der Reihe der Finger einschließlich eines seitlich anliegenden Daumens.

Durch das Rückenteil 2 wird eine zur Verfügung stehende Sitzfläche für den Fahrzeuginsassen 100 auf der Sitzfläche 21 des Fahrzeugsitzes 20 hinten verkürzt. Außerdem werden sich die Knie des Fahrzeuginsassen 100 auf dem Fahrzeugsitz 20 mit dem Fahrzeugsitzadapter 1 weiter vorne befinden als auf einem Fahrzeugsitz ohne Fahrzeugsitzadapter. Besonders in Limousinen kann dies dazu führen, dass der Fahrzeuginsasse 100 mit seinen Knien an der Rücklehne eines davor angeordneten Fahrzeugsitzes anstößt. Deshalb ist in einigen Ausführungsbeispielen das Rückenteil 2 so dünn ausgeführt, dass die Hände zwischen dem Rücken 104 des Fahrzeuginsassen 100 und der Rückenlehne 22 des Fahrzeugsitzes 20 nur dann Platz finden, wenn der Daumen der jeweiligen Hand sich jeweils oberhalb oder unterhalb der zugehörigen Handfläche befindet. Dazu entspricht die Dicke des Rückenteils 2 beim Einfedern etwa der Dicke einer Hand. Die Dicke einer Hand bemisst sich dabei etwa senkrecht zu einer Handinnenfläche.

In besonderen Ausführungsbeispielen ist dabei die vertikale Länge des Rückenteils 2 verkürzt, da einige Handschellen ein Verdrehen der Hände zueinander nur sehr eingeschränkt zulassen, so dass der gefesselte Fahrzeuginsasse geneigt ist, die Hände hinter seinem Rücken weiter oben anzuordnen.

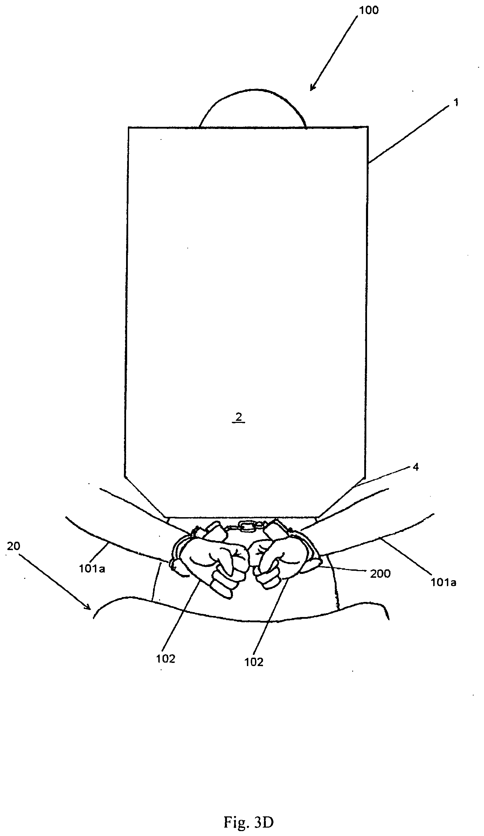

Fig. 3D zeigt eine Ansicht des Fahrzeugsitzadapters 1 von hinten, das an einem Fahrzeugsitz angeordnet ist, auf dem sich der Fahrzeuginsasse 100 befindet, wobei zur Verdeutlichung die Rückenlehne des Fahrzeugsitzes 20 weggelassen worden ist. Zur Verdeutlichung sind nur die Unterarme 101 des Fahrzeuginsassen 100 dargestellt, die Oberarme des Fahrzeuginsassen 100 sind weggelassen. Die Hände 102 des Fahrzeuginsassen 100 sind mit Hilfe von Handschellen 200 an den Handgelenken gefesselt. Die dargestellten Handschellen 200 sind durch Kettenglieder verbunden, wodurch die Hände 102 und die Unterarme 101 zueinander relativ frei beweglich sind, insbesondere zueinander verdreht werden können. In Fig. 3D sind die Handschellen so ausgeführt, dass die Hände nebeneinander angeordnet werden können. In einigen Ausführungsbeispielen ist das Rückenteil 2 verkürzt ausgeführt, sodass Fahrzeuginsassen, deren Arme mit einer starren Fesselungsvorrichtung zueinander fixiert sind, ihre Hände unter dem Fahrzeugsitzadapter 1 unterbringen können. In solchen Ausführungsbeispielen kann der Fahrzeugsitzadapter 1 ohne die abgeschrägten Flächen 4 ausgeführt werden.

In weiteren Ausführungsbeispielen ist der Fahrzeugsitzadapter ausgestaltet, sich auf einer Sitzfläche eines Fahrzeugsitzes abzustützen. In diesen Ausführungsbeispielen weist der Fahrzeugsitzadapter eine Aussparung auf, die ausgestaltet ist, wenigstens eine auf dem Rücken fixierte Hand aufzunehmen.

In einigen Ausführungsbeispielen ist der Fahrzeugsitzadapter 1 aus einem nachgiebigen und/oder elastischen Material hergestellt, so dass sich Kräfte auf das Fahrzeug, beispielsweise durch Bremsung oder Beschleunigung, gefedert auf den Fahrzeuginsassen übertragen. Ein solcher Fahrzeugsitzadapter kann auch als Unterlage für die Knie verwendet werden, wenn über einen gewissen Zeitraum Arbeiten im Knien auszuführen, beispielsweise während einer Herz-Druck-Massage in einer Erste-Hilfe-Situation. Auf dem Fahrzeugsitzadapter ist in einigen Ausführungsbeispielen eine Zeichnung mit den Anweisungen für eine Herz-Druck-Massage aufgebracht. Des Weiteren lässt sich der Fahrzeugsitzadapter als Schockkissen einsetzen, indem einer Person im Schock, die auf den Boden gelegt wurde, die Beine mit dem Fahrzeugsitzadapter als Stütze hochgelegt werden. In einem weiteren Ausführungsbeispiel ist der Fahrzeugsitzadapter aus einem Material hergestellt, dessen Dichte geringer als die Dichte von Wasser ist, sodass der Fahrzeugsitzadapter schwimmfähig ist. Ein solcher Fahrzeugsitzadapter lässt sich als Schwimmhilfe für Ertrinkende verwenden. Wenn er an einem Ende eines Seils befestigt ist, kann ein Ertrinkender an dem Fahrzeugsitzadapter aus dem Wasser gezogen werden. Dazu lässt sich ein Seil beispielsweise mit Hilfe eines Karabiners in den Gurt 10 an dem Fahrzeugsitzadapter 1 oder in der Befestigungsstruktur 3 einhängen. In weiteren Ausführungsbeispielen ist der Fahrzeugsitzadapter aus einem Schaumstoff hergestellt. Der Schaumstoff ist in einigen Ausführungsbeispielen geschlossenporig und somit wasserdicht. In weiteren Ausführungsbeispielen ist der Fahrzeugsitzadapter latexbeschichtet, wodurch er ebenfalls wasserdicht gemacht werden kann. Der Fahrzeugsitzadapter ist ausgestaltet mit Desinfektionsmitteln oder anderen Reinigungsmitteln abgewaschen zu werden.

In einer nicht dargestellten Alternative der Erfindung umfasst ein Fahrzeugsitz eine Fahrzeugsitzfläche und eine Rückenlehne. Die Fahrzeugsitzfläche erstreckt sich im wesentlichen waagrecht. Die Rückenlehne weist eine Rückenlehnenfläche auf, die sich zu der Fahrzeugsitzfläche etwa senkrecht erstreckt. Dabei ist die Rückenlehnenfläche von der Fahrzeugsitzfläche beabstandet. Somit befindet sich zwischen der Rückenlehnenfläche und der Fahrzeugsitzflächenseite ein Ausschnitt, in dem ein Fahrzeuginsasse seine auf dem Rücken gefesselten Hände platzieren kann.

Auch wenn diese Erfindung unter Bezeichnung verschiedener bestimmter Ausführungsbeispiele beschrieben wurde, sind andere Ausführungsbeispiele, die gewöhnlichen Fachmännern mit Blick auf die Veröffentlichung offenkundig sind, auch im Bereich dieser Erfindung.

Entsprechend ist bestimmungsgemäß der Bereich der Erfindung nur unter Bezugnahme auf die angehängten Ansprüche definiert.
- 1 -: Fahrzeugsitzadapter
- 2 -: Rückenteil
- 3 -: Befestigungsstruktur
- 4 -: abgeschrägte Fläche
- 5 -: Kopfteil
- 10 -: Befestigungsmittel
- 20 -: Fahrzeugsitz
- 21 -: Sitzfläche
- 22 -: Rückenlehne
- 23 -: Kopfstütze
- 24 -: Sicherheitsgurt
- 25 -: Gurtschließe
- 100 -: Fahrzeuginsasse
- 101 -: Arm
- 101a -: Unterarm
- 102 -: Hand
- 103 -: Kopf
- 103a -: Hinterkopf
- 104 -: Rücken
- 105 -: Ellbogen
- 200 -: Handschellen

## Patentansprüche

1. Fahrzeugsitzadapter für einen Fahrzeugsitz eines Fahrzeuges, umfassend:
- eine Befestigungseinrichtung zur Befestigung an einem Fahrzeugsitz (20), und
- einen Hauptkörper mit einer Hauptkörper-Fahrzeugsitzseite und einer Hauptkörper-Personenseite sowie einer Hauptkörper-Fahrzeugsitzflächenseite und einer Hauptkörper-Fahrzeugsitzkopfendenseite, wobei
- der Abstand zwischen der Hauptkörper-Fahrzeugsitzflächenseite und der Hauptkörper-Fahrzeugsitzkopfendenseite kleiner als der Abstand zwischen der Sitzfläche (21) des Fahrzeugsitzes (20) und dem Fahrzeugsitzkopfende des Fahrzeugsitzes (20) ist und/oder die Befestigungseinrichtung für eine Befestigung des Hauptkörpers an dem Fahrzeugsitz (20) derart ausgelegt ist, dass die Hauptkörper-Fahrzeugsitzflächenseite von der Fahrzeugsitzfläche des Fahrzeugsitzes (20) beabstandet ist, sodass zwischen der Hauptkörper-Fahrzeugsitzflächenseite und der Fahrzeugsitzflächenseite des Fahrzeugsitzes (20) ein Raum schaffbar ist; und
- wobei der Fahrzeugsitzadapter etwa quaderförmig ist und bemessen ist, sich bei bestimmungsgemäßer Anordnung in etwa von einem Beckenbereich eines Fahrzeuginsassen (100) bis zu einem Kopfbereich des Fahrzeuginsassen (100) zu erstrecken,
**dadurch gekennzeichnet, dass**
- die Befestigungseinrichtung ein Befestigungsmittel (10) und eine Befestigungsstruktur (3) umfasst,
- der Hauptkörper an seiner Hauptkörper-Fahrzeugsitzkopfendenseite ein vom Fahrzeugsitz abgewandtes Kopfteil (5) umfasst,
- die Befestigungsstruktur (3) als Auskragung unter dem Kopfteil (5) ausgebildet ist, und
- das Befestigungsmittel (10) ein Gurt oder Seil ist, um den Fahrzeugsitzadapter (1) mittels Eingriff unter der Auskragung und Umfassen der Fahrzeugsitzkopfendenseite des Fahrzeugsitzes (20) an diesem zu befestigen.

2. Fahrzeugsitzadapter nach Patentanspruch 1, wobei die Befestigungseinrichtung ausgelegt ist, den Hauptkörper variabel beabstandet von der Fahrzeugsitzflächenseite anzuordnen.

3. Fahrzeugsitzadapter nach Patentanspruch 1 oder 2, wobei der Kopfteil (5) eine Kopfteil- Personenseite und eine Kopfteil-Fahrzeugsitzseite aufweist und der Abstand zwischen diesen wenigstens teilweise größer als der Abstand zwischen der Hauptkörper-Geänderte Patentansprüche auf Mitteilung gemäß Art. 94(3) EPÜ vom 9. März 2016 Personenseite und der Hauptkörper-Fahrzeugsitzseite ist.

4. Fahrzeugsitzadapter nach Patentanspruch 3, wobei der Abstand zwischen der Kopfteil-Personenseite und der Kopfteil-Fahrzeugsitzseite etwa um so viel größer als der Abstand zwischen der Hauptkörper-Personenseite und der Hauptkörper-Fahrzeugsitzseite ist, wie der Rücken (104) eines Fahrzeuginsassen (100) in aufrechter Sitzposition weiter nach hinten ragt als der Hinterkopf des Fahrzeuginsassen (100).

5. Fahrzeugsitzadapter nach einem der vorstehenden Ansprüche, wobei die Auskragung als Aussparung ausgebildet ist.

6. Fahrzeugsitzadapter nach einem der vorstehenden Ansprüche, bei welchem der Fahrzeugsitzadapter bemessen ist, sich bei bestimmungsgemäßer Anordnung etwa über die Breite des Rückens des Fahrzeuginsassen (100) zu erstrecken.

7. Fahrzeugsitzadapter nach einem der vorstehenden Ansprüche, bei welchem der Fahrzeugsitzadapter bemessen ist, bei bestimmungsgemäßer Anordnung einen Abstand vom Rücken (104) des Fahrzeuginsassen (100) zur Rückenlehne (22) des Fahrzeugsitzes (20) einzustellen, der etwa der Breite oder der Dicke einer flachen Hand entspricht.

8. Fahrzeugsitzadapter nach einem der vorstehenden Ansprüche, bei welchem untere seitliche Kanten jeweils eine abgeschrägte Fläche aufweisen.

9. Fahrzeugsitzadapter nach einem der vorstehenden Ansprüche, wobei das Material, aus dem der Fahrzeugsitzadapter im Wesentlichen hergestellt ist, nachgiebig und/oder elastisch ist, wobei das Material insbesondere ein Schaumstoffmaterial ist, das vorzugsweise geschlossenporig ist.

10. Fahrzeugsitzadapter nach einem der vorstehenden Ansprüche, wobei das Material, aus dem der Fahrzeugsitzadapter im Wesentlichen hergestellt ist, eine Dichte aufweist, die geringer als die Dichte von Wasser ist, und/oder wobei das Material, aus dem der Fahrzeugsitzadapter im Wesentlichen hergestellt ist, schwerentflammbar ist.
Geänderte Patentansprüche auf Mitteilung gemäß Art. 94(3) EPÜ vom 9. März 2016

## Claims

1. Vehicle seat adapter for a vehicle seat of a vehicle, comprising:
- an attachment device for attachment to a vehicle seat (20), and
- a main body comprising a main body's vehicle seat side and a main body's person side as well as a main body's vehicle seat surface side and a main body's vehicle seat headend side, wherein,
- the distance between the main body's vehicle seat surface side and the main body's vehicle seat headend side is smaller than the distance between the seat surface (21) of the vehicle seat (20) and the vehicle seat headend of the vehicle seat (20) and/or the attachment device is configured for an attachment of the main body to the vehicle seat (20) such that the main body's vehicle seat surface side is spaced apart from the vehicle seat surface of the vehicle seat (20) such that space can be provided between the main body's vehicle seat surface side and the vehicle seat surface side of the vehicle seat (20); and
- wherein the vehicle seat adapter is approximately cuboid-shaped and is dimensioned, when arranged as intended, to extend from about a pelvic region of a vehicle occupant (100) to a head region of the vehicle occupant (100),
**characterized in that**
- the attachment device comprises an attachment means (10) and an attachment structure (3),
- the main body comprises a head portion (5) on its main body's vehicle seat headend side facing away from the vehicle seat,
- the attachment structure (3) is formed as an extension below the head portion (5), and
- the attachment means (10) is a belt or rope in order to attach the vehicle seat adapter (1) on the vehicle seat (2) by means of engagement below the extension and surrounding the vehicle seat headend side of the vehicle seat (2).

2. Vehicle seat adapter according to claim 1, wherein the attachment device is configured to arrange the main body at variable distance apart from the vehicle seat surface side.

3. Vehicle seat adapter according to claim 1 or 2, wherein the head portion (5) has a head portion's person side and a head portion's vehicle seat side and the distance between them is at least partially greater than the distance between the main body's person side and the main body's vehicle seat side.

4. Vehicle seat adapter according to claim 3, wherein the distance between the head portion's person side and the head portion's vehicle seat side is approximately about so much larger than the distance between the main body's person side and the main body's vehicle seat side as the back (104) of a vehicle occupant (100) in upright sitting position is extending further backwards than the back of the head of the vehicle occupant (100).

5. Vehicle seat adapter according to one of the preceding claims, wherein the extension is formed as recess.

6. Vehicle seat adapter according to one of the preceding claims, wherein the vehicle seat adapter is dimensioned, when arranged as intended, to extend approximately across the width of the back of the vehicle occupant (100).

7. Vehicle seat adapter according to one of the preceding claims, wherein the vehicle seat adapter is dimensioned, when arranged as intended, to set a distance from the back (104) of the vehicle occupant (100) to the backrest (22) of the vehicle seat (20) that corresponds approximately to the width or the thickness of a flat hand.

8. Vehicle seat adapter according to one of the preceding claims, wherein the lower side edges of which each have an oblique surface.

9. Vehicle seat adapter according to one of the preceding claims, wherein the material the vehicle seat adapter is substantially manufactured from is pliable and/or elastic, wherein the material is in particular a foam material, which preferably has closed pores.

10. Vehicle seat adapter according to one of the preceding claims, wherein the material the vehicle seat adapter is substantially manufactured from has a density that is larger than the density of water and/or wherein the material the vehicle seat adapter is substantially manufactured from is hardly inflammable.

## Revendications

1. Adaptateur de siège de véhicule pour un siège de véhicule d'un véhicule, comprenant :
- un dispositif de fixation pour la fixation à un siège de véhicule (20), et
- un corps principal ayant un côté siège de véhicule de corps principal et un côté personne de corps principal ainsi qu'un côté assise de siège de véhicule de corps principal et un côté tête de siège de véhicule de corps principal, dans lequel
- la distance entre le côté assise de siège de véhicule de corps principal et le côté tête de siège de véhicule de corps principal est plus petite que la distance entre l'assise de siège (21) du siège de véhicule (20) et la tête de siège de véhicule du siège de véhicule (20) et/ou le dispositif de fixation pour une fixation du corps principal sur le siège de véhicule (20) est conçu de telle sorte que le côté assise de siège de véhicule de corps principal soit espacé de l'assise de siège de véhicule du siège de véhicule (20) de façon qu'un espace puisse être créé entre le côté assise de siège de véhicule de corps principal et le côté assise de siège de véhicule du siège de véhicule (20) ; et
- dans lequel l'adaptateur de siège de véhicule est sensiblement parallélépipédique et est dimensionné pour s'étendre, en cas de disposition correcte, à peu près d'une région du bassin d'un occupant du véhicule (100) à une région de la tête d'un occupant du véhicule (100),
**caractérisé en ce que**
- le dispositif de fixation comprend un moyen de fixation (10) et une structure de fixation (3),
- le corps principal comprend sur son côté tête de siège de véhicule de corps principal une partie tête (5) éloignée du siège de véhicule,
- la structure de fixation (3) est réalisée sous la forme d'un porte-à-faux sous la partie tête (5), et
- le moyen de fixation (10) est une sangle ou un câble servant à fixer l'adaptateur de siège de véhicule (1) au siège de véhicule (20) en venant en prise sous le porte-à-faux et en entourant le côté tête de siège de véhicule du siège de véhicule (20).

2. Adaptateur de siège de véhicule selon la revendication 1, dans lequel le dispositif de fixation est conçu pour disposer le corps principal à une distance variable du côté assise de siège de véhicule.

3. Adaptateur de siège de véhicule selon la revendication 1 ou 2, dans lequel la partie tête (5) présente un côté personne de partie tête et un côté siège de véhicule de partie tête et la distance entre celles-ci est au moins en partie plus grande que la distance entre le côté personne de corps principal et le côté siège de véhicule de corps principal.

4. Adaptateur de siège de véhicule selon la revendication 3, dans lequel la distance entre le côté personne de partie tête et le côté siège de véhicule de partie tête est sensiblement d'autant plus grande que la distance entre le côté personne de corps principal et le côté siège de véhicule de corps principal, comme le dos (104) d'un occupant du véhicule (100) en position assise droite s'étend plus loin vers l'arrière que l'arrière de la tête de l'occupant du véhicule (100).

5. Adaptateur de siège de véhicule selon l'une des revendications précédentes, dans lequel le porte-à-faux est réalisé sous la forme d'un évidement.

6. Adaptateur de siège de véhicule selon l'une des revendications précédentes, dans lequel l'adaptateur de siège de véhicule est dimensionné pour s'étendre, en cas de disposition correcte, sensiblement sur la largeur du dos de l'occupant du véhicule (100).

7. Adaptateur de siège de véhicule selon l'une des revendications précédentes, dans lequel l'adaptateur de siège de véhicule est dimensionné pour régler, en cas de disposition correcte, une distance entre le dos (104) de l'occupant du véhicule (100) et le dossier (22) du siège de véhicule (20) qui correspond sensiblement à la largeur ou à l'épaisseur du plat de la main.

8. Adaptateur de siège de véhicule selon l'une des revendications précédentes, dans lequel des bords latéraux inférieurs présentent chacun une surface biseautée.

9. Adaptateur de siège de véhicule selon l'une des revendications précédentes, dans lequel le matériau à partir duquel l'adaptateur de siège de véhicule est essentiellement fabriqué est souple et/ou élastique, le matériau étant en particulier un matériau de type mousse, de préférence à pores fermés.

10. Adaptateur de siège de véhicule selon l'une des revendications précédentes, dans lequel le matériau à partir duquel l'adaptateur de siège de véhicule est essentiellement fabriqué présente une densité qui est inférieure à la densité de l'eau et/ou dans lequel le matériau à partir duquel l'adaptateur de siège de véhicule est essentiellement fabriqué est difficilement inflammable.
